# EUROPEAN PATENT SPECIFICATION

(11) **EP 1 676 771 B1**
(45) Date of publication and mention of the grant of the patent: **06.05.2009**
(21) Application number: 05028176.5
(22) Date of filing: 22.12.2005
(51) Int. Cl.: B62D 25/14, B66F 9/075

(54) **Modular cowl assembly for forklift trucks**
Modulare Haubenmontagestrasse
Ensemble de capot modulaire

(30) Priority: 28.12.2004 KR 2004114276
(43) Date of publication of application: 05.07.2006
(73) Proprietor: Doosan Infracore Co., Ltd., Dong-gu Incheon 401-020 (KR)
(72) Inventor: Jegal, Seung, Gyeyang-Gu Incheon (KR)
(74) Representative: Sparing Röhl Henseler Patentanwälte European Patent Attorneys

(56) References cited:
- EP-A- 0 548 943
- EP-A- 0 736 445
- US-A- 4 126 202
- US-A- 5 938 266

## Description

The invention is directed to a modular cowl assembly mounted on a front part of forklift trucks, and more specifically, to a modular cowl assembly for forklift trucks that combine a cowl with a steering column, an instrument board, a parking handle and other diver interface devices in a single module and thus can be transported, handled and mounted on forklift trucks in a simple and convenient manner regardless of the kinds of the forklift trucks to which is applied the modular cowl assembly.

Provided in front of a driver's compartment of forklift trucks are a cowl, a console, a parking brake handle and a variety of instrument boards, of which the console encloses or holds driver interface devices such as a steering wheel, a forward-reverse lever, a direction indicator lever and the like. Typically, the driver interface devices are attached to the body of the forklift trucks independently of the cowl.

Known from US-A-4 126 202 and EP-A-0 548 943 is vehicle control box module for modular construction truck cab according to the preamble of claim 1. The vehicle control box module is formed as a single peace, thus, both side members of the control module are configured as one body to the central member.

The task of mounting the cowl on the truck body is first carried out prior to attaching the driver interface control devices to the truck body. This makes it unavoidable for an operator to perform his or her tasks of attaching the interface devices within a narrow working space, thus making the operator's works quite laborious and time-consuming.

Furthermore, the cowl and the interface devices attached to the cowl are differently shaped and sized depending on the kinds of the forklift trucks. This requires the operator to carry out different kinds of attachment works on a truck-by-truck basis, which involves highly cumbersome, time-consuming and inefficient working processes.

It is the object of the invention to provide a modular cowl assembly for forklift trucks that can be transported, handled and mounted on forklift trucks in a simple and convenient manner with increased interchangeability regardless of the kinds of the forklift trucks to which the modular cowl assembly, may be applied.

Thus, the invention provides a modular cowl assembly according to the features of claim 1. A modular cowl assembly is provided, by combining a cowl with a steering column, an instrument board, a parking handle and other driver interface devices in a single module.

It is preferred that the modular cowl assembly further comprise an instrument board affixed to the right cowl cover, and further, that the modular cowl assembly further comprise a parking brake lever swingably attached to the left cowl cover.

It is also preferred that each of the cowl cover fastener means and the end cover fastener means comprise a screw.

The above and other objects, features and advantages of the invention will become apparent from the following description of a preferred embodiment given in conjunction with the accompanying drawings.
FIG. 1 is an exploded perspective view showing an embodiment of a modular cowl assembly for forklift trucks.
FIG. 2 is a rear perspective view showing a right cowl cover and a right end cover joined together by a fastener means in a modular cowl assembly for forklift trucks.
FIG. 3 is a rear perspective view showing a left cowl cover and a left end cover joined together by a fastener means in a modular cowl assembly for forklift trucks.

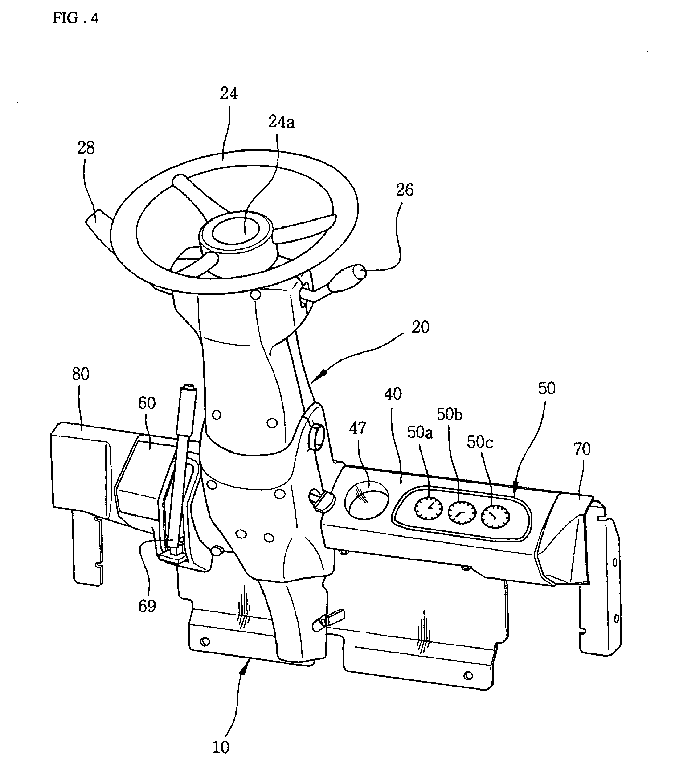

FIG. 4 is a perspective view showing a modular cowl assembly for forklift trucks, with their parts joined together.

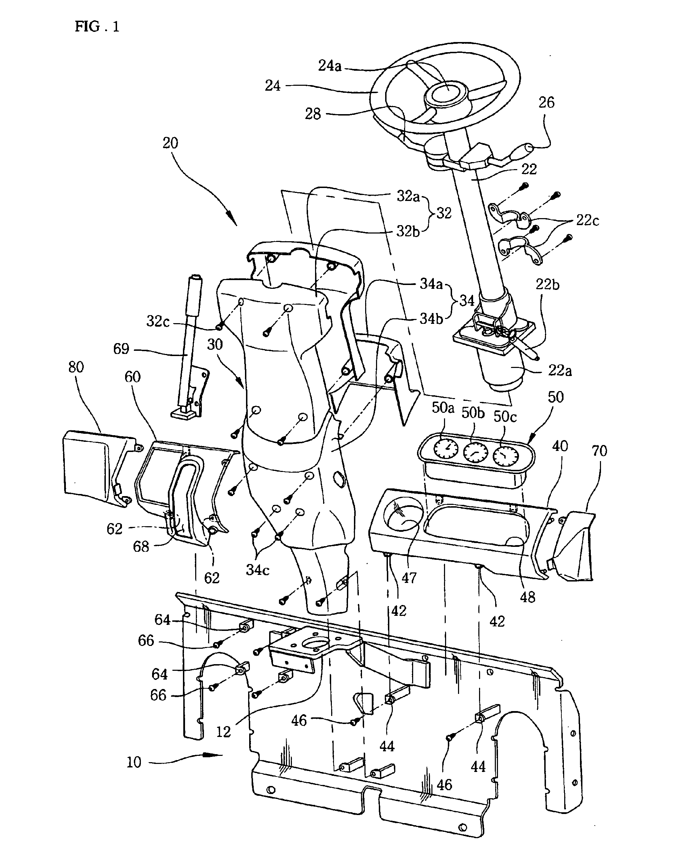

Referring first to FIG. 1, a modular cowl assembly for forklift trucks includes a cowl body 10 which provides a base for supporting a variety of driver interface devices in front of a driver's compartment of, e.g., forklift trucks. The cowl body 10 is removably mounted on a truck body (not shown) and composed of a material with high strength such as a press-formed metal plate and an injection-molded synthetic resin.

A console 20 is attached to the center area of the cowl body 10. The console 20 serves to partially enclose or hold a steering column 22, a direction indicator lever 26 and a forward-reverse lever 28. Attached to the top end of the steering column 22 is a steering wheel 24 that has a buzzer button 24a at its center. The steering column 22 is tiltably attached to a support bracket 12 of the cowl body 10 and can be tilted forwards or rearwards by the action of a tilting cylinder 22b into an angular position selected by a driver.

The console 20 is provided with a console cover 30 enclosing the most part of the steering column 22. The console cover 30 consists of a top cover 32 which is divided into first and second split cover parts 32a, 32b and a bottom cover 34 which is also divided into first and second split cover parts 34a, 34b.

The second split cover part 32b of the top cover 32 is attached to the steering column 22 by means of a support bracket 22c and then secured to the first split cover parts 32a by virtue of a screw 32c, thus joining the top cover 32 and the steering column 22 together. Similarly, the first and second split cover parts 34a, 34b of the bottom cover 34 are joined together by means of a screw 34c and the bottom cover 34 thus joined is secured to the cowl body 20.

Referring again to FIG. 1, the modular cowl assembly of the present invention includes a right cowl cover 40 disposed at the right side of the console 20 and affixed to the cowl body 10 by a fastener means. The fastener means comprises a plurality of first fixing lugs 42 integrally formed with the right cowl cover 40, a plurality of second fixing lugs 44 integrally formed with the cowl body 10 in alignment with the first fixing lugs 42, and fixing screws 46 for combining the first fixing lugs 42 and the second fixing lugs 44 together.

The right cowl cover 40 is provided with an inwardly recessed storage pocket 47 and an elongated opening 48 formed through the thickness of the right cowl cover 40. The storage pocket 47 serves to store small articles such as cups, coins, clips and the like for ready use. The elongated opening 48 is adapted for receiving an instrument board 50 that includes, for example, a cooling water temperature indicator 50a, a transmission oil temperature indicator 50b, a fuel indicator 50c, an engine preheat indicator (not shown) and the like. The instrument board 50 is electrically associated with a controller (not shown) mounted on a truck body.

The modular cowl assembly of the present invention includes a left cowl cover 60 disposed at the left side of the console 20 and affixed to the cowl body 10 by a fastener means. The fastener means comprises a plurality of first fixing lugs 62 integrally formed with the left cowl cover 60, a plurality of second fixing lugs 64 integrally formed with the cowl body 10 in alignment with the first fixing lugs 62, and fixing screws 66 for combining the first fixing lugs 62 and the second fixing lugs 64 together.

The left cowl cover 60 is provided with a slot 68 formed through the thickness thereof for swingably receiving a parking brake lever 69. The parking brake lever 69 can be pulled by the driver when he or she wishes to place the forklift truck in a parking condition. The parking brake lever 69 is operatively connected to a brake (not shown) with a cable so that, when pulled, it can cause the brake to arrest a driving axle against rotation.

Furthermore, the modular cowl assembly of the present invention includes a right end cover 70 disposed at an outer end side of the right cowl cover 40 for closing an open end of the right cowl cover 40 and a left end cover 80 disposed at an outer end side of the left cowl cover 60 for closing an open end of the left cowl cover 60.

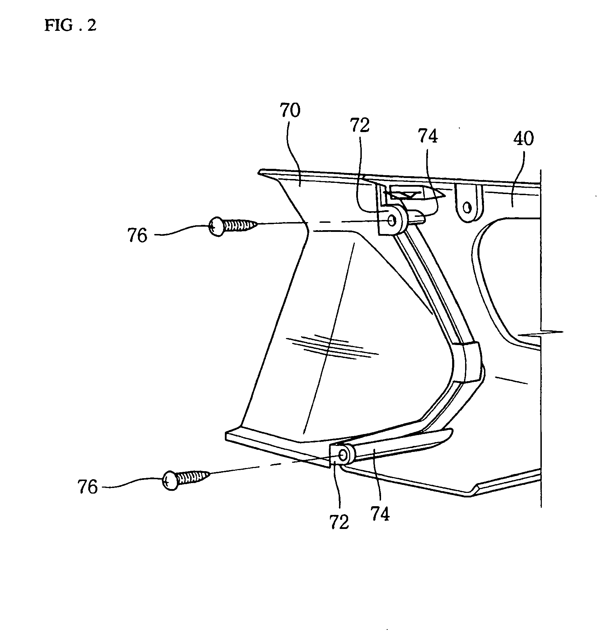

As best shown in FIG. 2, the right end cover 70 is attached to the right cowl cover 40 by means of a fastener means. The fastener means comprises a plurality of fixing ears 72 integrally formed with the right end cover 70, a plurality of fixing bosses 74 integrally formed with the right cowl cover 40 in alignment with the fixing ears 72, and fixing screws 76 for combining the fixing ears 72 and the fixing bosses 74 together.

The right end cover 70 of such configuration is so positioned at the outer end side of the right cowl cover 40 as to close the open end of the right cowl cover 40. This prevents foreign matters from infiltrating into the interior space of the right cowl cover 40

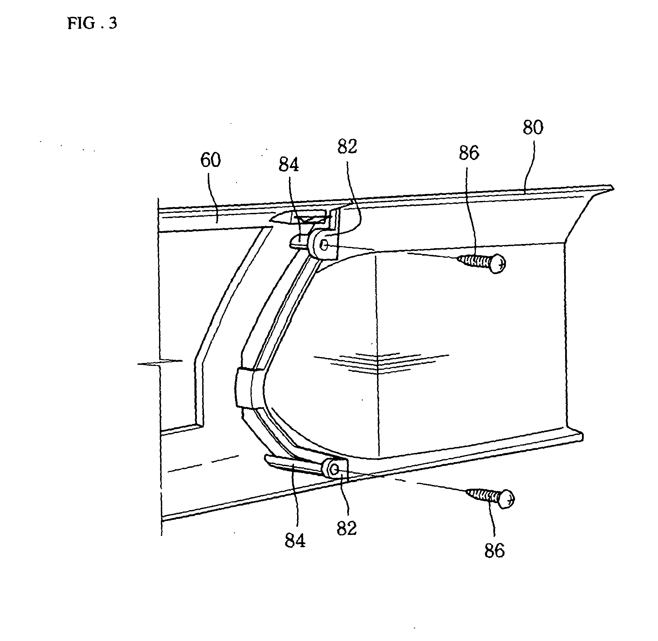

As clearly illustrated in FIG. 3, the left end cover 80 is attached to the left cowl cover 60 by means of a fastener means. The fastener means comprises a plurality of fixing ears 82 integrally formed with the left end cover 80, a plurality of fixing bosses 84 integrally formed with the left cowl cover 60 in alignment with the fixing ears 82, and fixing screws 86 for combining the fixing ears 82 and the fixing bosses 84 together.

The left end cover 80 of such configuration is so positioned at the outer end side of the left cowl cover 60 as to close the open end of the right cowl cover 60. This prevents foreign matters from infiltrating into the interior space of the left cowl cover 60.

Each of the right end cover 70 and the left end cover 80 is designed to have a length that varies with the kinds of forklift trucks to which is applied the modular cowl assembly. In other words, the right end cover 70 and the left end cover 80 are produced in multiple numbers in correspondence to the kinds of forklift trucks. Alternatively, the right end cover 70 and the left end cover 80 may be length-adjustably produced by use of, e.g., a bellows or other extendible components.

The modular cowl assembly of the present invention as configured above incorporates a cowl body 10 and a variety of driver interface devices, such as a steering column 22, a steering wheel 24, a direction indicator lever 26, a forward-reverse lever 28, a parking brake lever 69 and an instrument board 50, in a single module. The modular cowl assembly thus produced is transported, handled and attached to the truck body as a unit in the process of manufacture and assembly of the forklift trucks.

## Claims

1. A modular cowl assembly for forklift trucks, comprising:
a cowl body (10) to be mounted on a truck body in front of a driver's compartment;
a console (20) at least partially enclosing and holding a steering column (22), a direction indicator lever (26) and a forward-reverse lever (28);
a support bracket (12) for supporting the console (20) on the cowl body (10); a right cowl cover (40) disposed at a right side of the console (20) for covering at least a part of the cowl body (10);
a left cowl cover (60) disposed at a left side of the console (20) for covering at least apart of the cowl body (10);
a cowl cover fastener means for securing the right cowl cover (40) and the left cowl cover (60) to the cowl body (10);
a right end cover (70) disposed at an outer end side of the right cowl cover (40) for closing an open end of the right cowl cover (40); and
a left end cover (80) disposed at an outer end side of the left cowl cover (60) for closing an open end of the left cowl cover (60);
**characterized by**
an end cover fastener means for securing the right end cover (70) and the left end cover (80) to the right cowl cover (40) and the left cowl cover (60), respectively,
wherein each of the right end cover (70) and the left end cover (80) has a length which is selected with respect to the kind of forklift trucks to which is applied the modular cowl assembly.

2. The modular cowl assembly as recited in claim 1, further comprising an instrument board (50) affixed to the right cowl cover (40).

3. The modular cowl assembly as recited in claim 1, further comprising a parking brake lever (69) swingably attached to the left cowl cover (60).

4. The modular cowl assembly as recited in claim 2, further comprising a parking brake lever (69) swingably attached to the left cowl cover (60).

5. The modular cowl assembly as recited in claim 1, wherein each of the cowl cover fastener means and the end cover fastener means comprises a screw.

6. The modular cowl assembly as recited in claim 1, wherein the steering column (22) is tiltably attached to a support bracket (12) of the cowl body (10) and can be tilted by the action of a tilting cylinder (22b) into an angular position selected by a driver.

## Patentansprüche

1. Modulare Verkleidungsanordnung für Gabelstapler, die umfasst:
einen Verkleidungskörper (10), der an einem Fahrzeugkörper vor einer Fahrerkabine zu montieren ist;
eine Bedienungskonsole (20), die wenigstens teilweise eine Lenksäule (22), einen Richtungsanzeigerhebel (26) und einen Vorwärtsfahrt/Rückwärtsfahrt-Hebel (28) umschließt und hält;
eine Tragstütze (12), um die Bedienungskonsole (20) an dem Verkleidungskörper (10) zu unterstützen;
eine rechte Verkleidungsabdeckung (40), die an einer rechten Seite der Bedienungskonsole (20) angeordnet ist, um wenigstens einen Teil des Verkleidungskörpers (10) abzudecken;
eine linke Verkleidungsabdeckung (60), die an einer linken Seite der Bedienungskonsole (20) angeordnet ist, um wenigstens einen Teil des Verkleidungskörpers (10) abzudecken;
ein Verkleidungsabdeckungs-Befestigungsmittel, um die rechte Verkleidungsabdeckung (40) und die linke Verkleidungsabdeckung (60) am Verkleidungskörper (10) zu befestigen;
eine rechte Stirnabdeckung (70), die an einer äußeren Stirnseite der rechten Verkleidungsabdeckung (40) angeordnet ist, um ein offenes Ende der rechten Verkleidungsabdeckung (40) zu verschließen; und
eine linke Stirnabdeckung (80), die an einer äußeren Stirnseite der linken Verkleidungsabdeckung (60) angeordnet ist, um ein offenes Ende der linken Verkleidungsabdeckung (60) zu verschließen;
**gekennzeichnet durch**
ein Stirnabdeckungs-Befestigungsmittel, um die rechte Stirnabdeckung (70) und die linke Stirnabdeckung (80) an der rechten Verkleidungsabdeckung (40) bzw. an der linken Verkleidungsabdeckung (60) zu befestigen,
wobei sowohl die rechte Stirnabdeckung (70) als auch die linke Stirnabdeckung (80) eine Länge besitzt, die unter Berücksichtigung der des Typs des Gabelstaplers, an dem die modulare Verkleidungsanordnung angebracht wird, ausgewählt ist.

2. Modulare Verkleidungsanordnung nach Anspruch 1, die ferner ein Armaturenbrett (50) umfasst, das an der rechten Verkleidungsabdeckung (40) befestigt ist.

3. Modulare Verkleidungsanordnung nach Anspruch 1, die ferner einen Parkbremshebel (69) umfasst, der an der linken Verkleidungsabdeckung (60) schwenkbar befestigt ist.

4. Modulare Verkleidungsanordnung nach Anspruch 2, die ferner einen Parkbremshebel (69) umfasst, der an der linken Verkleidungsabdeckung (60) schwenkbar befestigt ist.

5. Modulare Verkleidungsanordnung nach Anspruch 1, wobei sowohl das Verkleidungsabdeckungs-Befestigungsmittel als auch das Stirnabdeckungs-Befestigungsmittel eine Schraube umfasst.

6. Modulare Verkleidungsanordnung nach Anspruch 1, wobei die Lenksäule (22) an einer Tragstütze (12) des Verkleidungskörpers (10) neigbar befestigt ist und durch die Betätigung eines Neigungszylinders (22b) in eine durch einen Fahrer ausgewählte angewinkelte Position geneigt werden kann.

## Revendications

1. Ensemble de capot modulaire pour chariots élévateurs, comprenant:
un corps de capot (10) devant être monté sur un châssis de chariot devant un compartiment de conducteur ;
une console (20) entourant au moins partiellement et tenant une colonne de direction (22), un levier indicateur de direction (26) et un levier de marche avant - arrière (28) ;
une potence de support (12) pour soutenir la console (20) sur le corps de capot (10);
un couvercle de capot droit (40) disposé d'un coté droit de la console (20) pour couvrir au moins une partie du corps de capot (10) ;
un couvercle de capot gauche (60) disposé d'un coté gauche de la console (20) pour couvrir au moins une partie du corps de capot (10) ;
des moyens de fixation de couvercle de capot pour fixer le couvercle de capot droit (40) et le couvercle de capot gauche (60) au corps de capot (10);
un couvercle d'extrémité droit (70) disposé à une extrémité extérieure du couvercle de capot droit (40) pour fermer une extrémité ouverte du couvercle de capot droit (40) ; et
un couvercle d'extrémité gauche (80) disposé à une extrémité extérieure du couvercle de capot gauche (60) pour fermer une extrémité ouverte du couvercle de capot gauche (60) ;
**caractérisé par**
des moyens de fixation de couvercle d'extrémité pour respectivement fixer le couvercle d'extrémité droit (70) et le couvercle d'extrémité gauche (80) au couvercle de capot droit (40) et au couvercle de capot gauche (60), dans lequel chacun des couvercle d'extrémité droit (70) et couvercle d'extrémité gauche (80) a une longueur qui est sélectionnée par rapport au type de chariot élévateur sur lequel l'ensemble de capot modulaire est appliqué.

2. Ensemble de capot modulaire selon la revendication 1, comprenant en outre un tableau de bord (50), attaché au couvercle de capot droit (40).

3. Ensemble de capot modulaire selon la revendication 1, comprenant en outre un levier de frein de stationnement (69) monté de manière articulée sur le couvercle de capot gauche (60).

4. Ensemble de capot modulaire selon la revendication 2, comprenant en outre un levier de frein de stationnement (69) monté de manière articulée sur couvercle de capot gauche (60).

5. Ensemble de capot modulaire selon la revendication 1, **caractérisé en ce que** des moyens de fixation de couvercle de capot et les moyens de fixation de couvercle d'extrémité comprennent chacun une vis.

6. Ensemble de capot modulaire selon la revendication 1, **caractérisé en ce que** la colonne de direction (22) est attachée de façon inclinable à une potence de support (12) du corps de capot (10) et peut être inclinée par action d'un cylindre d'inclinaison (22b) jusqu'à une position angulaire sélectionnée par le conducteur.
